Europäisches Patentamt

(19) **European Patent Office**

**Office européen des brevets**

(11) Numéro de publication: **0 274 485**
**B1**

(12) # FASCICULE DE BREVET EUROPÉEN

(45) Date de publication du fascicule du brevet:
17.01.90

(51) Int. Cl. ⁴: **B 29 C 65/74,** B 65 B 61/10

(21) Numéro de dépôt: **87904061.6**

(22) Date de dépôt: **23.06.87**

(86) Numéro de dépôt international:
**PCT/FR 87/00242**

(87) Numéro de publication international:
**WO 88/00130 (14.01.88 Gazette 88/02)**

(54) **PINCE DE SOUDURE ET DE DECOUPE POUR UN FILM EN MATIERE SYNTHETIQUE.**

(30) Priorité: **02.07.86 FR 8609701**

(43) Date de publication de la demande:
**20.07.88 Bulletin 88/29**

(45) Mention de la délivrance du brevet:
**17.01.90 Bulletin 90/03**

(84) Etats contractants désignés:
**AT BE CH DE GB IT LI LU NL SE**

(56) Documents cité:
**DE-A-3 119 961**
**FR-A-1 445 557**
**FR-A-2 414 393**
**GB-A-1 158 200**

(73) Titulaire: **SOCIETE GENERALE DES EAUX MINERALES DE VITTEL**
**B.P. 43**
**F-88800 Vittel (Vosges) (FR)**

(72) Inventeur: **SCHMITZ, Roger**
**Route de Lignéville**
**F-88800 Vittel (FR)**

(74) Mandataire: **Poupon, Michel**
**3, rue Thiers B.P. 247**
**F-88007 Epinal Cédex (FR)**

EP 0 274 485 B1

## Description

La présente invention a pour objet une pince de soudure et de découpe pour un film en matière synthétique mono ou multicouche, du type comportant deux machoires l'une par rapport à l'autre, l'une des machoires comportant une aire de contact de soudure, l'autre étant munie d'un moyen de découpe du film.

Des dispositifs de ce type sont en eux-mêmes connus de longue date, par exemple du document de brevet GB-A-1 158 200.

Ils présentent un certain nombre d'inconvénients, en particulier quant à la qualité de tenue de la soudure.

En outre, qu'ils soient du type à lame chauffante ou à lame coupante, la lame a toujours tendance à s'encrasser, soit par contact direct avec le film (lame chauffante), soit par son réchauffement du fait de sa proximité des éléments de soudure (lame coupante non chauffante).

Le dispositif a donc tendance à s'encrasser.

L'invention se propose de remédier à ces inconvénients des dispositifs de l'art antérieur.

Conformément à l'invention, ce résultat est obtenu avec une pince de soudure et de découpe pour un film en matière synthétique mono ou multicouche, du type comportant deux machoires mobiles l'une par rapport à l'autre, l'une des machoires comportant une aire de contact de soudure, l'autre étant munie d'un moyen de découpe du film, caractérisée en ce que d'une part l'aire de contact de soudure consiste essentiellement en un feuillard comportant une gorge de section sensiblement en V se prolongeant en deux ailes parallèles au chant de la machoire correspondante et que d'autre part le moyen de découpe du film consiste en un fil de section circulaire faisant saillie par rapport au chant de la machoire qui le supporte, le fil et la gorge coopérant entre eux pour réaliser la découpe.

On comprendra mieux l'invention grâce à la description ci-après d'un mode de mise en oeuvre donné à titre d'exemple non limitatif, en référence aux dessins annexés dans lesquels:

- la figure 1 est une vue schématique en coupe d'une pince de soudure conforme à l'invention en position de repos;
- la figure 2 est une vue schématique en coupe d'une pince de soudure conforme à l'invention en position d'utilisation.

La pince (1) de soudure et de découpe se compose essentiellement de deux machoires respectivement (2) et (3) mobiles l'une par rapport à l'autre.

La machoire (2) supporte un feuillard métallique de soudure (4) comportant une gorge (5) sensiblement de section en V, dont les branches se prolongent par deux ailes (6, 7) parallèles au chant de ladite machoire.

Le feuillard (4) est recouvert par un isolant (8) électrique permettant par sa finesse la transmission de la chaleur, par exemple du teflon. Le teflon a en outre l'avantage de présenter un faible coefficient d'adhérence.

Le feuillard est alimenté de manière en elle-même connue pour réaliser une soudure, par exemple mais non limitativement pour réaliser une soudure par impulsion.

La machoire (3) supporte pour sa part un fil (9) de coupe de section circulaire. Ce fil fait saillie par rapport au chant de la machoire (3) et est partiellement noyé dans une masse de matière élastique (10), par exemple en silicone, qui sert de contre-appui aux ailes (6, 7) de l'autre machoire. Lors de l'opération de soudure, le fil (9) s'efface légèrement dans la masse (10).

De manière optionnelle, le fil (9) peut également être chauffé.

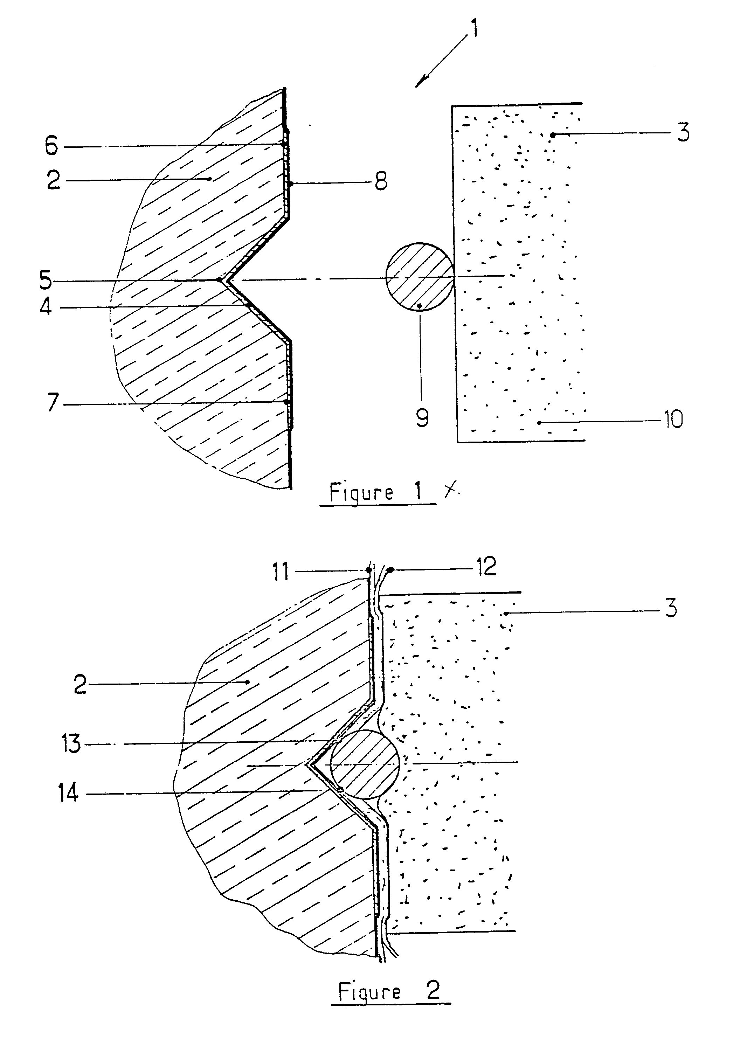

Lors de l'opération de soudure et de découpe représentée à la figure 2, les deux épaisseurs de film (11, 12) sont soudées par les ailes (6, 7) coopérant avec la masse (10), tandis que le fil (9) découpe les deux épaisseurs de film au niveau de ses points de contact (13, 14) avec la gorge (5).

On a constaté que ce dispositif présente des avantages considérables par rapport aux dispositifs de l'art antérieur à savoir en particulier:

- augmentation de la tenue mécanique de la soudure;
- excellente découpe, qu'il y ait ou non apport de calories sur le fil;
- absence de dépôt de film sur les éléments qui viennent en contact avec lui;
- auto-alignement des deux éléments du fait de leurs formes complémentaires mâle-femelle.

En outre les lames de coupe habituelles, qui sont obtenues par tréfilerie, présentent une arête dont l'angle n'est jamais très aigu. Avec le dispositif de l'invention on peut varier l'effet de coupe avec un diamètre plus ou moins important.

De plus, les fils utilisés sont commercialisés enrobés de téflon et ne nécessitent qu'une faible chauffe pour fonctionner, ce qui limite d'autant les risques d'encrassement.

La forme du fil et de la gorge peuvent être légèrement modifiées. Par exemple, la gorge peut être arrondie en fonction de la composition du film et/ou de son épaisseur. De même on peut faire varier le diamètre du fil et l'angle de la gorge.

## Revendications

1. Pince de soudure et de découpe pour un film en matière synthétique mono ou multicouche, du type comportant deux machoires (2, 3) mobiles l'une par rapport à l'autre, l'une des machoires comportant une aire de contact de soudure, l'autre étant munie d'un moyen de découpe du film, caractérisée en ce que d'une part l'aire de contact de soudure consiste essentiellement en un feuillard (4) comportant une gorge (5) de section sensiblement en V se prolongeant en deux ailes (6, 7) parallèles au chant de la machoire correspondante et que d'autre part le moyen de découpe du film consiste en un fil (9) de section circulaire faisant saillie par rapport au chant de la machoire qui le supporte, le fil et la gorge coopérant entre eux pour réaliser la découpe.

2. Pince de soudure et de découpe selon la revendication 1, caractérisée en ce que le feuillard (4) est recouvert par un isolant électrique permettant par sa finesse la transmission de la chaleur, de préférence du teflon.

3. Pince de soudure et de découpe selon l'une quelconque des revendications 1 et 2, caractérisée en ce que le feuillard est alimenté de manière à réaliser une soudure par impulsion.

4. Pince de soudure et de découpe selon l'une quelconque des revendications 1 à 3, caractérisée en ce que le fil (9) est partiellement noyé dans une masse de matière élastique (10), par exemple en silicone, dans laquelle le fil (9) s'efface légèrement lors de l'opération de soudure, ladite masse servant de contre-appui aux ailes (6, 7).

5. Pince de soudure et de découpe selon l'une quelconque des revendications 1 à 4, caractérisée en ce que le fil (9) est chauffé.

Claims

1. A welding and cutting torch for a film of mono or multi-layer synthetic material, of the type comprising two jaws (2, 3) adapted for movement in respect of each other, one of the jaws comprising a welding contact area, the other being provided with a means of cutting the film, characterised in that, on the one hand, the welding contact area consists essentially of a strip (4) comprising a groove (5) of substantially V-shaped cross-section, which is extended into two wings (6, 7) parallel with the edge of the corresponding jaw and in that, on the other, the film cutting means consists of a wire (9) of circular cross-section projecting in relation to the edge of the jaw which carries it, the wire and the groove co-operating inter se in order to make the cut.

2. Welding and cutting torch according to Claim 1, characterised in that the strip (4) is covered by an electrical insulator which is preferably of Teflon and which, by virtue of its fineness, permits the transmission of heat.

3. A welding and cutting torch according to either of Claims 1 or 2, characterised in that the strip is supplied in such a way as to produce a weld by pulses.

4. A welding and cutting torch according to any one of Claims 1 to 3, characterised in that the wire (9) is partially embedded in a mass of resilient material (10), for example of silicone, in which the wire (9) moves aside slightly during the welding operation, the rings (6, 7)

5. A welding and cutting torch according to any one of Claims 1 to 4, characterised in that the wire (9) is heated.

Patentansprüche

1. Zange zum Schweißen und Abschneiden eines einlagigen oder mehrlagigen Kunststoffilmes, welche zwei relativ zueinander bewegliche Backen (2, 3) aufweist, von denen eine der Backen eine Kontaktfläche zum Schweißen hat und die andere mit Mitteln zum Abschneiden des Filmes versehen ist, *dadurch gekennzeichnet,* daß ein Teil der Kontaktfläche zum Schweißen im wesentlichen aus einem Bandmaterial (4) besteht, welches eine Vertiefung (5) von im wesentlichen v-förmigem Querschnitt mit zwei Seitenflügeln (6, 7) hat, die sich parallel zur Kante der entsprechenden Backe erstrecken und daß andererseits die Mittel zum Abschneiden des Films aus einem Draht (9) kreisförmigen Querschnitts bestehen, der aus der Fläche der ihn tragenden Backe vorspringt.

2. Zange zum Schweißen und Abschneiden gemäß Anspruch 1, *dadurch gekennzeichnet,* daß das Bandmaterial (4) von einem elektrischen Isolator, vorzugsweise Teflon, überzogen ist, welcher aufgrund seiner Dünnschichtigkeit die Wärmeübertragung erlaubt.

3. Zange zum Schweißen und Abschneiden gemäß einem der Ansprüche 1 und 2, *dadurch gekennzeichnet,* daß das Bandmaterial derart vorgesehen ist, daß ein Impulsschweißen möglich wird.

4. Zange zum Schweißen und Abschneiden gemäß einem der Ansprüche 1 bis 3, *dadurch gekennzeichnet,* daß der Draht (9) teilweise in einer elastischen Masse (10), beispielsweise einem Silikon, eingelassen ist und daß der Draht (9) während der Schweißoperation leicht zurückweicht, wobei die genannte Masse als Gegenlager für die Seitenflügel (6, 7) dient.

5. Zange zum Schweißen und Abschneiden gemäß einem der Ansprüche 1 bis 4, *dadurch gekennzeichnet,* daß der Draht (9) beheizt ist.

Figure 1 ×.

Figure 2